# EUROPÄISCHE PATENTSCHRIFT

(11) **EP 1 391 765 B1**
(45) Veröffentlichungstag und Bekanntmachung des Hinweises auf die Patenterteilung: **16.12.2009**
(21) Anmeldenummer: 03018531.8
(22) Anmeldetag: 16.08.2003
(51) Int. Cl.: G02B 7/00, C22C 21/02

(54) **Halteeinrichtung für ein optisches Element**
Support means for optical element
Support pour un élément optique

(30) Priorität: 23.08.2002 DE 10239522
(43) Veröffentlichungstag der Anmeldung: 25.02.2004
(73) Patentinhaber: Z/I Imaging Ltd., Shannon Clare (IE)
(72) Erfinder: Trunz, Michael, 73479 Ellwangen-Pfuhlheim (DE); Hinz, Alexander, Dr., 89551 Koenigsbronn (DE)
(74) Vertreter: Lorenz, Werner

(56) Entgegenhaltungen:
- DE-A- 10 137 848
- US-A- 4 777 639
- PATENT ABSTRACTS OF JAPAN vol. 2000, no. 01, 31. Januar 2000 (2000-01-31) & JP 11 269592 A (SUMITOMO LIGHT METAL IND LTD), 5. Oktober 1999 (1999-10-05)
- INTERNET, [Online] XP002262764 Gefunden im Internet: <URL:http://www.matweb.com/search/Specific Material.asp?bassnum=MA6016> [gefunden am 2003-11-25]

## Beschreibung

Die Erfindung betrifft eine Luftbildkamera mit einem Objektiv und mit in einem Objektivgehäuse angeordneten optischen Elementen, die mit Halteeinrichtungen versehen sind.

In optischen Abbildungseinrichtungen, beispielsweise Kameraobjektiven, Fernrohren, Ferngläsern oder Teleskopen werden optische Elemente in Form von Linsen, Planplatten, Spiegeln, Prismen etc. eingesetzt. Solche optische Elemente bestehen in der Regel aus Glas und werden mittels Metall - oder Kunststoffbauteilen auf einer Trägervorrichtung gehalten. Um mit optischen Abbildungseinrichtungen eine hohe Abbildungsgüte zu erzielen, ist es erforderlich, dass diese Halteeinrichtungen eine hohe mechanische Stabilität aufweisen. Werden optische Abbildungseinrichtungen sich ändernden Umwelteinflüssen, wie etwa Temperaturschwankungen ausgesetzt, besteht die Gefahr, dass sich die optischen Elemente der Abbildungseinrichtungen im Abbildungsstrahlengang verschieben. Dies ruft bei Abbildungseinrichtungen Farb- und geometrische Bildfehler hervor. Solche Fehler können auch durch Vibrationen und Stöße erzeugt werden.

Um die Temperaturstabilität von Kameraobjektiven zu erhöhen, ist es beispielsweise aus der EP 0 298 058 B1 bekannt, für eine Linse ein ringförmiges, geschlitztes Halteelement aus Aluminium vorzusehen. An diesem Halteelement befinden sich in regelmäßigen Abständen radiale Ausnehmungen, welche bewirken, dass trotz einer unterschiedlichen Ausdehnung von Halteelement und Linse bei Temperaturschwankungen nicht aus der optischen Achse des Objektivs verschoben wird.

Die US 6,631,040 B1 betrifft ein Verfahren und eine Vorrichtung, um eine Temperaturkompensation in einem optisches Gerät zu bewirken.

In der US 4,777,639 ist eine Haltevorrichtung für einen Spiegel eines laseroptischen Elementes beschrieben, wobei die Haltevorrichtung aus einer Aluminiumlegierung besteht.

Die DE 101 37 848 A1 beschreibt ein Kurbelwellenlager für einen Motorblock, wobei der untere Lagerblock aus einer Aluminium-Silizium-Legierung gebildet ist, die einen Längenausdehnungskoeffizienten aufweist, der mit dem der Kurbelwelle aus einer Eisenlegierung vergleichbar ist.

Das Patent Abstracts of Japan 11 269 592 A beschreibt eine Aluminiumlegierung mit einem Siliziumbestandteil von 12 - 45 Gewichtsprozent.

In der US 4,908,705 ist eine Luftbildkamera beschrieben.

Besonders hohe Stabilitätsanforderungen werden an Objektive für Luftbildkameras gestellt. Von solchen Luftbildkameras wird gefordert, dass sie mit einer Luftbildaufnahme einen Bildbereich geometrisch präzise abbilden. Dabei muss die Bildauflösung und die geometrische Bildstabilität über den gesamten Bildbereich wenigstens 2 µm betragen. Um diesen Anforderungen über einen großen Temperaturbereich von ca. -40°C bis ca. +70°C und bei Vibrations- und Schockbelastungen während eines Flugbetriebs zu genügen, werden solche Objektive aus Metallwerkstoffen gefertigt, deren Ausdehnungskoeffizient an denjenigen der für die im Objektiv eingesetzten optischen Gläser angepasst ist. Für Luftbildkameraobjektive, wie etwa das Objektiv DMC 4/120 mm der Firma Carl Zeiss wird deshalb für Linsenfassunggen der Werkstoff X14 mit einem thermischen Ausdehnungskoeffizienten α im Bereich von 10 * 10⁻⁶K⁻¹ eingesetzt oder es wird Titan verwendet, dessen thermischer Ausdehnungskoeffizient α ≈ 9 * 10⁻⁶ K⁻¹ beträgt. Das Außengehäuse eines solchen Objektivs ist üblicherweise aus Edelstahl gehalten etwa X14 oder X12. Dies erlaubt es, die mechanischen Spannungen zu minimieren, welche das Außengehäuse auf die Linsenfassungen ausübt. Die erwähnten Werkstoffe sind allerdings etwa dreimal so schwer wie Aluminium. Aluminium wird als Material für Fassungen und Gehäuse von klassischen Photoobjektiven verwendet. Aufgrund seines hohen thermischen Ausdehnungskoeffizienten von α ≈ 24 * 10⁻⁶ K⁻¹ ist es jedoch zum Einsatz in Objektiven für Luftbildkameras nicht geeignet. Dies würde zu übergroßen Verzeichnungen und ungenügenden Abbildungsleistungen führen.
Aufgabe der Erfindung ist es daher, eine Luftbildkamera mit einem Objektiv bereitzustellen, welche ein geringes Eigengewicht aufweist und sich zum Einsatz in hochstabilen Objektiven nämlich in Luftbildkameras eignet.

Diese Aufgabe wird erfindungsgemäß durch die in Anspruch 1 genannten Merkmale gelöst.

Erfindungsgemäß besteht somit die Halteeinrichtung wenigstens teilweise aus einem siliziumhaltigen Aluminiumwerkstoff, bei dem der Siliziumanteil so gewählt ist, dass der Ausdehnungskoeffizient des siliziumhaltigen Aluminiumwerkstoffes an den Ausdehnungskoeffizienten des dazugehörigen optischen Elements in der Halteeinrichtung weitestgehend angepasst ist. Auf diese Weise können über einen weiten Temperaturbereich mechanische Spannungen zwischen einem optischen Element in der Halteeinrichtung und der Halteeinrichtung selbst konstant gehalten werden. Der Siliziumanteil in dem Aluminiumwerkstoff beträgt mehr als 15 Gewichtsprozent. Auf diese Weise wird eine gute Bearbeitbarkeit des Aluminiumwerkstoffes gewährleistet.

In Weiterbildung der Erfindung ist das optische Element als Linse, als Planplatte, als Spiegel oder als Prisma ausgebildet. Auf diese Weise kann ein optisches Instrument geschaffen werden, dessen Stabilität bei sich ändernden Umwelteinflüssen nicht beeinträchtigt wird.

In Weiterbildung der Erfindung ist die Halteeinrichtung als Linsenfassung ausgebildet. Ebenso kann in Weiterbildung der Erfindung auch die Halteeinrichtung als Objektivgehäuse ausgebildet sein. Auf diese Weise kann ein präzises, temperaturstabiles Hochleistungsobjektiv bereitgestellt werden.

Erfindungsgemäß kann der Siliziumanteil in dem Aluminiumwerkstoff auch mehr als 30 Gewichtsprozent betragen. Auf diese Weise wird eine besonders leichte Haltevorrichtung geschaffen.

Eine sehr vorteilhafte Ausbildung der Erfindung besteht gemäß Anspruch 6 darin, dass der Aluminiumwerkstoff bei einer Temperatur im Bereich von 21°C einen thermischen Ausdehnungskoeffizienten von (α ≤ 24 * 10⁻⁶ bei einer Dichte von ρ ≤ 7,5 g / cm³ hat. Ein Verfahren zur Herstellung eines solchen Werkstoffes ist in der DE 195 32 244 C2, der DE 195 32 253 C2 oder der DE 195 32 252 A1 beschrieben. Dort ist erläutert, dass es sich bei diesem Werkstoff um einen verschleißbeständiges und wärmefestes Material handelt, das sich für Zylinderlaufbuchsen im Motorenbau eignet.

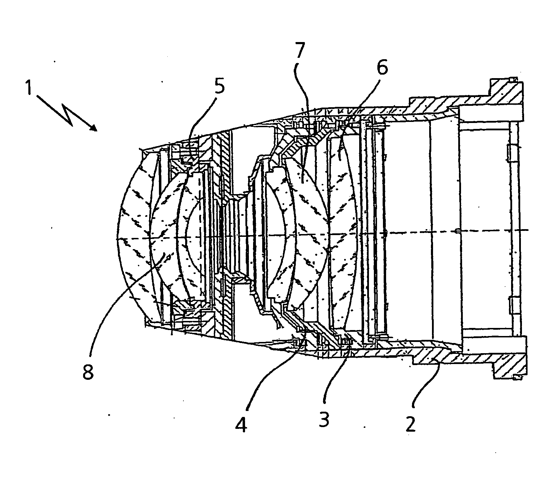

Eine Luftbildkamera mit den erfindungsgemäßen Halteeinrichtungen für optische Elemente eignet sich insbesondere zur Mitführung in kleinen Flugzeugen und unbemannten Flugkörpern. Eine vorteilhafte Ausführungsform der Erfindung ist in der einzigen Figur dargestellt und wird nachfolgend beschrieben.

Die einzige Figur zeigt ein Objektiv 1 für eine Luftbildkamera. Das Objektiv 1 umfasst ein Objektivgehäuse 2, in dem mittels Fassungen 3, 4 und 5 Objektivlinsen 6, 7 und 8 gehalten werden.

Das Objektivgehäuse 2 und die Fassungen 3, 4 und 5 bestehen aus einer Aluminiumlegierung mit folgender Zusammensetzung:

| | |
|---|---|
| Silizium: | 33 - 35 Gewichtsprozent, |
| Eisen: | 1,8 - 2,2. Gewichtsprozent, |
| Nickel: | 0,8 - 1,2 Gewichtsprozent, |
| Aluminium: | Rest. |

Eine solche Aluminiumlegierung wird von der Firma PEAK Werkstoff GmbH, Siebeneicker Strasse 235, 42553 Velbert, Deutschland unter dem Handelsnamen "Dispal®" vertrieben und hat folgende physikalische Eigenschaften:

| Eigenschaft | Im Bereich | Einheit | Wert |
|---|---|---|---|
| Dichte | 21 °C | g/cm³ | 2,62 |
| thermischer Ausdehnungskoeffizient | 21-100 °C | 10⁻⁶/K | 12 |
| | 21-200°C | 10⁻⁶/K | 13 |
| | 21 - 300 °C | 10⁻⁶/K | 14 |
| | 21 - 400 °C | 10⁻⁶/K | 14 |

Durch verändern des Siliziumanteiles in der Legierung kann der Ausdehnungskoeffizient des Werkstoffes für die Haltevorrichtung eingestellt werden und so an den Ausdehnungskoeffizient des Glases eines verwendeten optischen Elementes, etwa einer Linse, angepasst werden. Die Firma PEAK bietet den Werkstoff mit einem Siliziumanteil an, der zwischen 17 Gewichtsprozent und 35 Gewichtsprozent liegt. Neben einer guten Verschleißbeständigkeit und hohen Steifigkeit ist dieses Material gut zerspanbar und hat auch bei hohen Einsatztemperaturen eine große Festigkeit.

Es sei bemerkt, dass es auch möglich ist, lediglich das Objektiv-Gehäuse oder Teile davon aus der beschriebenen Aluminiumlegierung zu fertigen, dagegen für die Linsenfassungen einen anderen Werkstoff vorzusehen.

## Patentansprüche

1. Luftbildkamera mit einem Objektiv und mit in einem Objektivgehäuse angeordneten optischen Elementen, die mit Halteeinrichtungen versehen sind,
**dadurch gekennzeichnet, dass** die Halteeinrichtungen (2, 3, 4, 5) wenigstens teilweise aus einem siliziumhaltigen Aluminiumwerkstoff bestehen, wobei der Siliziumanteil in dem siliziumhaltigen Aluminiumwerkstoff so gewählt ist, dass der Ausdehnungskoeffizient des siliziumhaltigen Aluminiumwerkstoffes an den Ausdehnungkoeffizienten des dazugehörigen optischen Elements (6, 7, 8) angepasst ist, und wobei der Siliziumanteil in dem Aluminiumwerkstoff mehr als 15 Gewichtsprozent beträgt.

2. Luftbildkamera nach Anspruch 1,
**dadurch gekennzeichnet, dass** das optische Element als Linse (6, 7, 8) oder als Planplatte oder als Spiegel oder als Prisma augebildet ist.

3. Luftbildkamera nach Anspruch 1 oder 2,
**dadurch gekennzeichnet, dass** die Halteeinrichtung als Linsenfassung (3, 4, 5) ausgebildet ist.

4. Luftbildkamera nach einem der Ansprüche 1 bis 3,
**dadurch gekennzeichnet, dass** die Halteeinrichtung als Objektivgehäuse (2) ausgebildet ist.

5. Luftbildkamera nach einem der Ansprüche 1 bis 4,
**dadurch gekennzeichnet, dass** der Siliziumanteil in dem Aluminiumwerkstoff mehr als 30 Gewichtsprozent beträgt.

6. Luftbildkamera nach einem der vorherigen Ansprüche,
**dadurch gekennzeichnet, dass** der Aluminiumwerkstoff bei einer Temperatur im Bereich von 21°C einen Temperaturausdehnungskoeffizienten α ≤ 24 * 10⁻⁶ K⁻¹ bei einer Dichte von ρ ≤ 7,5 g / cm³ aufweist.

## Claims

1. Aerial survey camera having an objective and having optical elements, which are arranged in an objective housing and are provided with holding devices, **characterised in that** the holding devices (2, 3, 4, 5) consist at least partially of an aluminium material containing silicon, the proportion of silicon in the aluminium material containing silicon being selected so that the expansion coefficient of the aluminium material containing silicon is matched to the expansion coefficient of the associated optical element (6, 7, 8), and the proportion of silicon in the aluminium material being more than 15 per cent by weight.

2. Aerial survey camera according to Claim 1, **characterised in that** the optical element is designed as a lens (6, 7, 8) or as a plane plate or as a mirror or as a prism.

3. Aerial survey camera according to Claim 1 or 2, **characterised in that** the holding device is designed as a lens frame (3, 4, 5).

4. Aerial survey camera according to one of Claims 1 to 3, **characterised in that** the holding device is designed as an objective housing (2).

5. Aerial survey camera according to one of Claims 1 to 4, **characterised in that** the proportion of silicon in the aluminium material is more than 30 per cent by weight.

6. Aerial survey camera according to one of Claims 1 to 5, **characterised in that** the aluminium material has a thermal expansion coefficient α ≤ 24 * 10⁻⁶ K⁻¹ at a temperature in the range of 21 °C with a density of ρ ≤ 7.5 g / cm³.

## Revendications

1. Caméra optique de prise de vues comportant un objectif et un boitier contenant des éléments optiques pourvus de moyens de fixation,
**caractérisée en ce que**
les moyens de fixation (2, 3, 4, 5) sont au moins partiellement constitués d'un matériau à base d'aluminium contenant du silicium, la proportion de silicium dudit matériau à base d'aluminium contenant du silicium étant choisie de telle manière que le coefficient de dilatation dudit matériau à base d'aluminium et contenant du silicium soit ajusté par rapport au coefficient de dilatation de l'élément optique (6, 7, 8) correspondant, et la proportion de silicium contenu dans le matériau à base d'aluminium étant supérieure à 15% en poids.

2. Caméra optique de prise de vues, selon la revendication 1,
**caractérisée en ce que**
l'élément optique est constitué d'une lentille (6, 7, 8) ou d'une plaque plane ou d'un miroir ou d'un prisme.

3. Caméra optique de prise de vues, selon la revendication 1 ou 2,
**caractérisée en ce que**
le moyen de fixation est constitué d'une bague de maintien de lentille (3, 4, 5).

4. Caméra optique de prise de vues, selon l'une des revendications 1 à 3,
**caractérisée en ce que**
le moyen de fixation est constitué d'un boîtier (2) de lentille.

5. Caméra optique de prise de vues, selon l'une des revendications 1 à 4,
**caractérisée en ce que**
la proportion de silicium contenu dans le matériau à base d'aluminium est supérieure à 30% en poids.

6. Caméra optique de prise de vues, selon l'une quelconque des revendications précédentes,
**caractérisée en ce que**
le matériau à base d'aluminium présente un coefficient de dilatation thermique α ≤24 * 10⁻⁶ K⁻¹ pour une densité de ρ ≤ 7,5 g / cm³ pour une température de l'ordre de 21 °C.
